# FASCICULE DE BREVET EUROPEEN

(11) **EP 0 381 590 B1**
(45) Date de publication et mention de la délivrance du brevet: **24.03.1993**
(21) Numéro de dépôt: 90400293.8
(22) Date de dépôt: 02.02.1990
(51) Int. Cl.: B29C 53/74, B29C 53/12, B29C 67/14

(54) **Procédé et dispositif pour fabriquer des barres incurvées**
Verfahren und Vorrichtung zum Herstellen gekrümmter Stäbe
Method and device for producing curved bars

(30) Priorité: 02.02.1989 FR 8901331
(43) Date de publication de la demande: 08.08.1990
(73) Titulaire: INSTITUT FRANCAIS DU PETROLE, 92502 Rueil-Malmaison (FR)
(72) Inventeur: Huvey, Michel, F-78380 Bougival (FR)

(56) Documents cités:
- EP-A- 0 299 814
- FR-A- 2 312 356

## Description

La présente invention concerne un procédé et un dispositif pour fabriquer en continu des barres incurvées, à section constante ou non constante, comportant des éléments de renfort noyés dans une matière stabilisable.

De telles barres incurvées sont, en particulier, mais non exclusivement, utilisables pour fabriquer des tubes légers à haute résistance par enroulement hélicoïdal des barres incurvées profilées. On a déjà proposé, par exemple dans le brevet français 2.312.356, de réaliser une barre en matière plastique armée en garnissant d'un mélange de filaments à haute résistance et de matière plastique réticulable un organe de moulage en forme de gorge, enroulé autour d'un mandrin, la barre étant extraite de cet organe de moulage après une réticulation au moins partielle, cette réticulation pouvant résulter d'un traitement thermique.

Cependant, lors de la production de telles barres incurvées profilées, la longueur de barres produite par machine est rapidement plafonnée du fait du nombre limité de spires de l'organe de moulage sur le mandrin et du temps de réticulation auquelles sont assujetties les barres disposées dans l'organe de moulage. En effet, le nombre de spires de l'organe de moulage, dont la plus grande partie est située à l'intérieur des moyens de réticulation, est limité en raison notamment des difficultés d'avancement de l'organe de moulage sur le mandrin, ces difficultés croissant avec le nombre de spires.

L'objet de la présente invention est par suite de fournir un procédé et un dispositif qui permettent d'installer sur le mandrin un plus grand nombre de spires de l'organe de moulage, sans altérer la qualité des barres, permettant ainsi fabriquer des barres incurvées avec une cadence accrue.

La présente invention propose un nouveau procédé de fabrication en continu de barres incurvées à section constante ou non constante comportant des éléments de renforcement noyés dans une matière stabilisable produite à l'intérieur d'un organe de moulage, que l'on enroule autour d'un mandrin à une première extrémité, et dans lequel on dispose des éléments de renforcement imprégnés de matière stabilisable, puis on procède à la stabilisation de ladite matière sur au moins une partie de la longueur du mandrin. Ce procédé est notamment caractérisé en ce que l'on produit des déplacements axiaux discontinus de l'organe de moulage relativement au mandrin, les déplacements étant dirigés suivant un sens qui produit un mouvement de l'organe de moulage vers une deuxième extrémité du mandrin opposée à ladite première extrémité et en ce que l'on dégage l'organe de moulage du mandrin au niveau de ladite deuxième extrémité.

Lorsque l'organe de moulage est enroulé sur le mandrin le long du flanc d'une came-tambour, on pourra produire les déplacements axiaux par un mouvement alternatif de translation, ayant une composante axiale, de la came-tambour relativement au mandrin.

Le mandrin étant immobile en translation, on pourra produire les déplacements axiaux de l'organe de moulage au moyen de ladite came-tambour.

On pourra produire lesdits déplacements à un rythme sensiblement régulier relativement à la fréquence de rotation du mandrin. Ces déplacements pourront avoir unitairement une amplitude sensiblement égale au quotient d'une dimension transversale de l'organe de moulage, mesurée suivant l'axe du mandrin, par le rythme desdits déplacements.

L'amplitude unitaire des déplacements pourra être comprise entre deux fois la dimension de l'organe de moulage et un dixième de cette dimension de l'organe de moulage.

On pourra produire les déplacements axiaux de l'organe de moulage en réalisant un mouvement axial du mandrin.

L'invention fournit en outre un dispositif pour fabriquer en continu des barres profilées incurvées à partir d'éléments de renforcement imprégnés de matière stabilisable, comportant des moyens d'entraînement en rotation d'un mandrin autour d'un axe longitudinal, un organe de moulage enroulable autour du mandrin ayant un profil intérieur recevant les éléments de renforcement imprégnés de matière stabilisable, des moyens de guidage à l'enroulement de l'organe de moulage, des moyens d'introduction dans l'organe de moulage des éléments de renforcement imprégnés de matière stabilisable, des moyens de stabilisation de ladite matière stabilisable, disposés sur une partie au moins de la longueur du mandrin, permettant d'obtenir lesdites barres, et des moyens pour extraire ledit organe de moulage et lesdites barres incurvées à une extrémité du mandrin.

Le dispositif est notamment caractérisé en ce que le dispositif comporte en outre des moyens de déplacement discontinu dudit organe de moulage relativement audit mandrin, suivant l'axe du mandrin et vers ladite extrêmité où l'on extrait l'organe de moulage et les barres incurvées.

Les moyens de guidage pourront comporter une came-tambour ayant un flanc le long duquel est enroulé ledit organe de moulage, ladite came-tambour, étant déplaçable suivant l'axe du mandrin, et lesdits moyens de déplacement discontinus pourront produire un mouvement de va-et-vient de la came-tambour relativement au mandrin.

Le mandrin sera avantageusement fixe et ladite came-tambour mobile suivant l'axe du mandrin.

Le mandrin pourra être axialement mobile et la came-tambour pourra être fixe.

Les moyens de déplacement pourront produire des déplacements à un rythme compris entre 1/2 et 10 relativement à la fréquence de rotation du mandrin, et l'amplitude des déplacements pourra être sensiblement égale au quotient d'une dimension transversale de l'organe de moulage suivant l'axe du mandrin par le rythme desdits déplacements.

On entend par stabilisation, un processus physique ou chimique tel que fusion avec refroidissement ou réticulation qui permet à un corps, que l'on qualifiera de stabilisable, de prendre une forme stable. Les matériaux thermoplastiques, thermodurcissables ou élastomères sont des corps stabilisables.

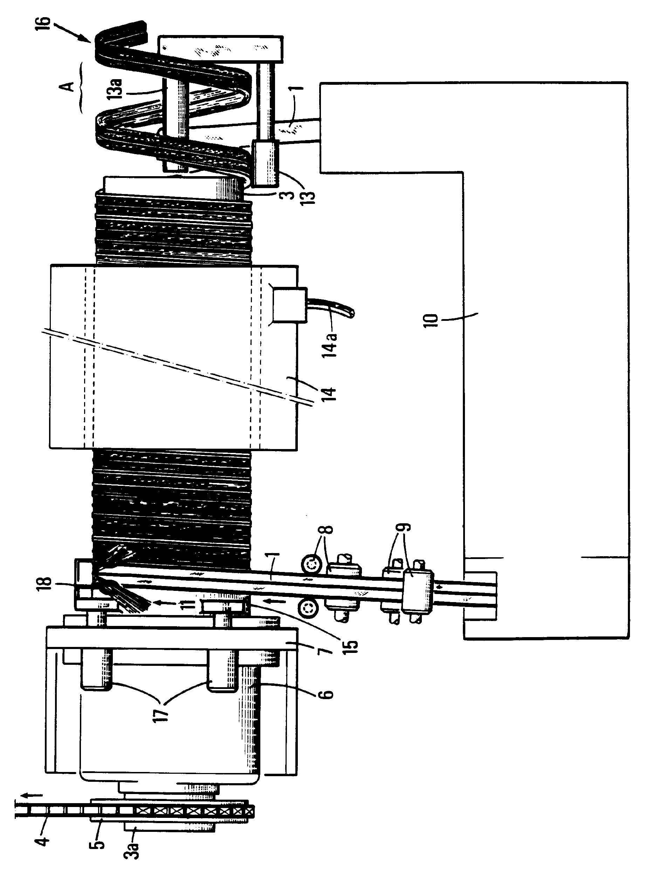

L'invention sera bien comprise et ses avantages apparaîtront clairement à la lecture de la description suivante illustrée par la figure 1 annexée qui schématise le dispositif selon l'invention.

Sur cette figure 1, la référence 1 désigne un moule profilé évidé ou organe de moulage qui est bobiné sur un mandrin à une première extrémité.

L'arbre 3a du mandrin 3 est relié à des moyens d'entraînement en rotation de ce mandrin, qui comportent par exemple une chaîne 4 engrenant sur un pignon denté 5 calé sur l'arbre 3a.

L'arbre 3a repose sur le palier 6 par l'intermédiaire de roulements, ce palier étant solidaire d'un châssis 7.

Avant d'être bobiné sur le mandrin 3 le long du flanc de la came-tambour 15, à une première extrémité du mandrin, le moule profilé passe entre les galets de guidage 8 et 9.

La came-tambour 15 comporte un flanc hélicoïdal par rapport à l'axe longitudinal du mandrin, ce flanc permettant de positionner correctement les spires du moule 1.

L'organe de moulage 1 présente deux gorges longitudinales parallèles qui, au fur et à mesure de l'enroulement sur le mandrin 3 sont remplies de filaments 11 à haute résistance, ou rovings, préalablement imprégnés d'une matière plastique stabilisable, capable d'adhérer auxdits filaments, ce mélange de filaments et de matière stabilisable formant les noyaux 16 du profilé qui deviendront, après stabilisation et extraction du mandrin, les barres cintrées armées.

Les filaments sont correctement guidés vers l'organe de moulage 1 au moyen d'un organe 18 solidaire de la came-tambour 15, de manière que leur mouvement respectif soit en synchronisme.

Le moule profilé 1 ainsi garni passe ensuite dans un four 14 où il est soumis à un traitement thermique capable de stabiliser la matière plastique armée qu'il renferme.

Le four est alimenté en énergie par tout moyen approprié, tel que par exemple, le câble 14a, si l'on utilise des moyens de chauffage électriques.

A une deuxième extrémité du mandrin, on extrait du moule profilé 1 les barres incurvées 16 formées par moulage. On réalise par exemple cette extraction en courbant le moule 1 grâce aux galets 13 et 13a et en le faisant passer entre des groupes de barres formées par exemple, dans l'espace A.

Les barres incurvées armées 16 extraites du moule 1 sont dirigées vers un lieu de stockage ou d'utilisation, et le moule 1 est réutilisé en continu, après passage dans un dispositif 10 de nettoyage du moule 1 par un moyen convenable.

La came-tambour 15 est mise en translation selon un mouvement alternatif, au moyen de plusieurs vérins 17 fixés au châssis 7, et agissant simultanément sur la came-tambour 15 pour pousser l'organe de moulage 1 vers la deuxième extrémité du mandrin. Les vérins 17 utilisés sont des vérins hydrauliques, mais on pourra sans inconvénient utiliser toutes autres sortes de vérins, tels que des vérins électriques. L'amplitude des déplacements de la came-tambour 15 (ou des vérins 17) dépend du rythme des déplacements des vérins. D'une manière générale, indépendamment du rythme de déplacement des vérins, le déplacement axial de l'organe de moulage 1 est de préférence uniquement dû aux mouvements de la came-tambour 15.

Ainsi, de préférence, la somme des déplacements axiaux de l'organe de moulage 1 est égale au nombre de tours d'enroulement sur le mandrin 3 de l'organe de moulage multiplié par la dimension transversale de l'organe de moulage suivant l'axe du mandrin 1.

En d'autres termes, l'amplitude des déplacements de la came-tambour 15 est de préférence égale au quotient de la dimension transversale de l'organe de moulage suivant l'axe du mandrin par le rythme des déplacements rapporté à la fréquence de rotation du mandrin.

Suivant notamment les caractéristiques du mandrin, de l'organe de moulage et des barres incurvées, on adapte le rythme de déplacement de la came-tambour. Ce rythme est avantageusement de 0,5 à 10 déplacements par tour de mandrin.

A titre d'exemple non limitatif, on a réalisé l'organe de moulage, ayant deux profils de section intérieure rectangulaire 5 mm x 7 mm et une épaisseur des parois externes et des cloisons internes de 1 mm, en polyamide 11 (généralement désigné par la marque de fabrique Rilsan) par un procédé d'extrusion classique. On a garni cette gorge d'un moulage de 70 parties en poids de mèches continues de fibres de verre unidirectionnelles non tordues et de 30 parties en poids d'un mélange de résine époxyde du type diglycidyléther de bisphénol A (100 parties) et de 4,4′ diaminodiphényl méthane (27 parties en poids).

Après passage dans le four 14, le produit fini quitte le mandrin 3 et l'hélice obtenue peut être utilisée pour réaliser une conduite légère résistante.

## Revendications

1. Procédé de fabrication en continu de barres incurvées à section constante ou non constante comportant des éléments de renforcement noyés dans une matière stabilisable produite à l'intérieur d'un organe de moulage (1) que l'on enroule autour d'un mandrin (3) à une première extrémité et dans lequel on dispose des éléments de renforcement (11) imprégnés de matière stabilisable, puis on procède à la stabilisation de ladite matière sur au moins une partie de la longueur du mandrin, caractérisé en ce que l'on produit des déplacements axiaux discontinus de l'organe de moulage (1) relativement au mandrin (3), les déplacements étant dirigés suivant un sens qui produit un mouvement de l'organe de moulage (1) vers une deuxième extrémité du mandrin opposée à ladite première extrémité, et en ce que l'on dégage ledit organe de moulage dudit mandrin au niveau de ladite deuxième extrémité.

2. Procédé selon la revendication 1, dans lequel l'organe de moulage est enroulé sur le mandrin (3) le long du flanc d'une came-tambour (15), caractérisé en ce que l'on produit lesdits déplacements axiaux par un mouvement alternatif de translation, ayant une composante axiale, de la came-tambour (15) relativement au mandrin (3).

3. Procédé selon la revendication 2, caractérisé en ce que ledit mandrin (3) est immobile en translation et en ce que l'on produit lesdits déplacements axiaux de l'organe de moulage (1) au moyen de ladite came- tambour (15).

4. Procédé selon l'une des revendications 1 à 3, caractérisé en ce qu'on produit lesdits déplacements à un rythme sensiblement régulier, relativement à la fréquence de rotation du mandrin (3), et en ce que les déplacements ont unitairement une amplitude sensiblement égale au quotient d'une dimension transversale de l'organe de moulage suivant l'axe du mandrin (3) par le rythme desdits déplacements.

5. Procédé selon la revendication 4, caractérisé en ce que l'amplitude unitaire des déplacements est comprise entre deux fois la dimension de l'organe de moulage et un dixième de cette dimension.

6. Procédé selon l'une des revendications 1 ou 2, caractérisé en ce que l'on produit les déplacements axiaux de l'organe de moulage, en réalisant un mouvement axial du mandrin.

7. Dispositif pour fabriquer en continu des barres profilées incurvées (16) à partir d'éléments de renforcement (11) imprégnés de matière stabilisable, comportant des moyens d'entraînement (4, 5) en rotation d'un mandrin autour d'un axe longitudinal, un organe de moulage (1) enroulable autour du mandrin (3) ayant un profil intérieur recevant les éléments de renforcement (11) imprégnés de matière stabilisable, des moyens de guidage (15) de l'organe de moulage (1) à l'enroulement, des moyens d'introduction dans l'organe de moulage des éléments de renforcement (11) imprégnés de matière stabilisable, des moyens de stabilisation (14) de ladite matière stabilisable, disposés sur une partie au moins de la longueur du mandrin (3), permettant d'obtenir lesdites barres (16), et des moyens (13, 13a) pour extraire ledit organe de moulage (1) et lesdites barres (16) incurvées à une extrémité du mandrin (3), caractérisé en ce que le dispositif comporte en outre des moyens de déplacement (17) discontinu dudit organe de moulage (1) relativement audit mandrin (3), suivant l'axe du mandrin et vers ladite extrêmité où l'on extrait l'organe de moulage et les barres incurvées.

8. Dispositif selon la revendication 7, caractérisé en ce que les moyens de guidage comportent une came-tambour (15) ayant un flanc le long duquel est enroulé ledit organe de moulage (1), ladite came-tambour (15) étant déplaçable suivant l'axe du mandrin, et en ce que lesdits moyens de déplacement discontinus produisent un mouvement de va-et-vient de la came-tambour (15) relativement au mandrin (3).

9. Dispositif selon la revendication 8, caractérisé en ce que le mandrin (3) est fixe axialement et ladite came-tambour (15) est mobile suivant l'axe du mandrin.

10. Dispositif selon l'une des revendications 7 à 9, caractérisé en ce que les moyens de déplacement produisent des déplacements à un rythme compris entre 1/2 et 10 relativement à la fréquence de rotation du mandrin et en ce que l'amplitude des déplacements est sensiblement égale au quotient d'une dimension transversale de l'organe de moulage suivant l'axe du mandrin par le rythme desdits déplacements.

11. Dispositif selon l'une des revendications 7 ou 8, caractérisé en ce que ledit mandrin est axialement mobile suivant l'axe du mandrin.

12. Dispositif selon l'une des revendications 7 à 10, caractérisé en ce qu'il comporte un organe de guidage (18) des filaments adapté à se déplacer en synchronisme avec ladite came-tambour (15).

## Patentansprüche

1. Verfahren zur kontinuierlichen Herstellung gekrümmter Stäbe mit konstantem oder nicht konstantem Querschnitt mit Verstärkungselementen, die in ein stabilisierbares Material eingebettet sind, das innerhalb eines Formorgans (1) erzeugt ist, das man um einen Dorn (3) an einem ersten Ende wickelt und in dem man Verstärkungselemente (11) anordnet, die mit stabiliserbarem Material imprägniert sind und dann zur Stabilisierung dieses Materials auf wenigstens einem Teil der Länge des Dorns übergeht, dadurch gekennzeichnet, daß man diskontinuierliche Axialverschiebungen bzw. Bewegungen des Formorgans (1) relativ zum Dorn (3) erzeugt, wobei die Verschiebungen in einem Sinn gerichtet sind, der eine Bewegung des Formorgans (1) gegen ein zweites Ende des Dorns, das diesem ersten Ende gegenüberliegt, erzeugt und daß man dieses Formorgan vom Dorn in Höhe dieses zweiten Endes freigibt.

2. Verfahren nach Anspruch 1, bei dem das Formorgan auf den Dorn (3) längs der Flanke einer Nocken-Trommel (15) aufgewickelt wird, dadurch gekennzeichnet, daß man diese Axialverschiebungen durch eine alternative Translationsbewegung mit einer Axialkomponente der Nocken-Trommel (15) relativ zum Dorn (3) erzeugt.

3. Verfahren nach Anspruch 2, dadurch gekennzeichnet, daß dieser Dorn (3) translationsunbeweglich ist, und daß man diese Axialverschiebungen des Formorgans (1) vermittels dieser Nocken-Trommel (15) erzeugt.

4. Verfahren nach einem der Ansprüche 1 bis 3, dadurch gekennzeichnet, daß man diese Verschiebungen bei einem im wesentlichen regelmäßigen Rhythmus relativ zur Rotationsfrequenz des Dorns (3) erzeugt und daß die Verschiebungen einheitlich eine Amplitude haben, die im wesentlichen gleich dem Quotienten einer Querabmessung des Formorgans längs der Achse des Dorns (3) durch den Rhythmus dieser Verschiebungen ist.

5. Verfahren nach Anspruch 4, dadurch gekennzeichnet, daß die Einheitsamplitude der Verschiebungen zwischen der doppelten Abmessung des Formorgans und einem Zehntel dieser Abmessung liegt.

6. Verfahren nach einem der Ansprüche 1 oder 2, dadurch gekennzeichnet, daß man die Axialverschiebungen des Formorgans erzeugt, indem man eine Axialbewegung des Dorns hervorruft.

7. Vorrichtung zur kontinuierlichen Herstellung der gekrümmten Profilstäbe (16) ausgehend von Verstärkungselementen (11), die mit stabilisierbarem Material imprägniert sind, mit Mitteln (4, 5), um einen Dorn um eine Längsachse in Drehung mitzunehmen, einem Formorgan (1), das um den Dorn (3) aufwickelbar ist und ein Innenprofil hat, das die mit stabilisierbarem Material imprägnierten Verstärkungselemente (11) aufnimmt, Mitteln (15) zum Führen des Formorgans (1) beim Aufwickeln, Mitteln zum Einführen - in das Formorgan - der mit stabilisierbarem Material imprägnierten Verstärkungselemente (11), Mitteln (14) zur Stabilisierung dieses stabilisierbaren Materials, die auf wenigstens einem Teil der Länge des Dorns (3) angeordnet sind und es ermöglichen, diese Stäbe (16) zu erhalten, und Mitteln (13, 13a), um dieses Formorgan (1) und diese gekrümmten Stäbe (16) an einem Ende des Dorns (3) herauszuziehen, dadurch gekennzeichnet, daß die Vorrichtung im übrigen Mittel (17) zur diskontinuierlichen Verschiebung dieses Formorgans (1) relativ zu diesem Dorn (3) längs der Achse des Dorns und gegen dieses Ende, wo man dieses Formorgan und diese gekrümmten Stangen herauszieht, hat.

8. Vorrichtung nach Anspruch 7, dadurch gekennzeichnet, daß die Führungsmittel eine Nocken-Trommel (15) mit einer Flanke umfassen, längs der dieses Formorgan (1) aufgewickelt ist, wobei diese Nocken-Trommel (15) längs der Achse dieses Dorns verschiebbar ist und diese diskontinuierlichen Verschiebungsmittel eine Hin- und Herbewegung der Nocken-Trommel (15) relativ zum Dorn (3) erzeugen.

9. Vorrichtung nach Anspruch 8, dadurch gekennzeichnet, daß der Dorn (3) axial fest ist und diese Nocken-Trommel (15) längs der Achse des Dorns beweglich ist.

10. Vorrichtung nach einem der Ansprüche 7 bis 9, dadurch gekennzeichnet, daß die Verschiebemittel Verschiebungen bei einem Rhythmus zwischen 1/2 und 10 relativ zur Rotationsfrequenz des Dornes erzeugen und daß die Amplitude der Verschiebungen im wesentlichen gleich dem Quotienten einer Querabmessung des Formorgans längs der Achse des Dorns durch den Rhythmus dieser Verschiebungen ist.

11. Vorrichtung nach einem der Ansprüche 7 oder 8, dadurch gekennzeichnet, daß dieser Dorn axial beweglich längs der Achse des Dornes ist.

12. Vorrichtung nach einem der Ansprüche 7 bis 10, dadurch gekennzeichnet, daß sie ein Führungsorgan (18) der Fäden oder Drähte umfaßt, das so ausgelegt ist, daß es sich synchron mit dieser Nocken-Trommel (15) verschiebt.

## Claims

1. A method for the continuous manufacture of curved strips with a constant or non-constant cross section comprising reinforcing elements embedded in a stabilisable material produced inside a moulding element (1) that is wound around a mandrel (3) at a first end and into which the reinforcing elements (11) impregnated with stabilisable material are placed, after which the material is stabilised over at least one section of the length of the mandrel, characterised in that the moulding element (1) is displaced discontinuously and axially relative to the mandrel (3), these displacements being in a direction that produces movement of the moulding element (1) towards a second end of the mandrel opposite the first end and in that the moulding element is disengaged from the mandrel at the level of the second end.

2. Method in accordance with claim 1, in which the moulding element is wound around the mandrel (3) along the side of a barrel cam (15), characterised in that the axial displacements are produced by an alternating translational movement, having an axial component, of the barrel cam (15) relative to the mandrel.

3. Method in accordance with claim 2, characterised in that the mandrel (3) is fixed in translation and in that the axial displacements of the moulding element (1) are produced by means of the barrel cam (15).

4. Method in accordance with one of claims 1 to 3, characterised in that the displacements are produced at an essentially regular rate relative to the rotation frequency of the mandrel (3) and in that the displacements as a unit have an amplitude substantially equal to the quotient of a transverse dimension of the moulding element along the axis of the mandrel (3) divided by the rate of the displacements.

5. Method in accordance with claim 4, characterised in that the unit amplitude of the displacements is between twice the dimension of the moulding element and one tenth of its dimension.

6. Method in accordance with one of claims 1 or 2, characterised in that the axial displacements of the moulding elements are produced by an axial movement of the mandrel.

7. Device for the continuous manufacture of curved, shaped strips (16) from reinforcing elements (11) impregnated with stabilisable material, comprising means for rotating (4, 5) a mandrel around a longitudinal axis, a moulding element (1) that may be wound around the mandrel (3) with an interior profile such that it can hold the reinforcing elements (11) impregnated with stabilisable material, means for guiding (15) the moulding element (1) in its winding action, means for introducing the reinforcing elements (11) impregnated with stabilisable material into the moulding element, stabilisation means (14) for the stabilisable material, arranged on at least one section of the length of the mandrel (3), to enable the production of the strips (16), and means (13, 13a) for disengaging the moulding element (1) and the curved strips (16) at an end of the mandrel (3), characterised in that this device further comprises means for discontinuous displacement (17) of the moulding element (1) relative to the mandrel (3) along the axis of the mandrel and towards the end at which the moulding element and curved strips are removed.

8. Device in accordance with claim 7, characterised in that the guide means comprise a barrel cam (15) with a side along which the moulding element (1) is wound, this barrel cam (15) being movable along the axis of the mandrel and in that the discontinuous displacements means produce a reciprocating movement of the barrel cam (15) relative to the mandrel (3).

9. Device in accordance with claim 8, characterised in that the mandrel (3) is fixed axially and the barrel cam (15) is movable along the axis of the mandrel.

10. Device in accordance with one of claims 7 to 9, characterised in that the displacement means produce displacements at a rate between 1/2 and 10 relative to the rotation frequency of the mandrel and in that this amplitude of displacements is essentially equal to the quotient of a transverse dimension of the moulding element along the axis of the mandrel divided by the rate of displacements.

11. Device in accordance with one of claims 7 or 8, characterised in that the mandrel is axially movable along the axis of the mandrel.

12. Device in accordance with one of claims 7 to 10, characterised in that it comprises a guiding element (18) for the filaments designed to move in synchronisation with the barrel cam (15).
